# FASCICULE DE BREVET EUROPEEN

(11) **EP 2 401 499 B1**
(45) Date de publication et mention de la délivrance du brevet: **09.10.2013**
(21) Numéro de dépôt: 10709906.1
(22) Date de dépôt: 24.02.2010
(51) Int. Cl.: F03G 7/06, F01P 7/16, G05D 23/02

(54) **DISPOSITIF ACTIONNEUR A MATIÈRE DILATABLE**
AKTUATORVORRICHTUNG MIT EINEM DEHNBAREN MATERIAL
ACTUATOR DEVICE INCLUDING AN EXPANDABLE MATERIAL

(30) Priorité: 25.02.2009 FR 0951182
(43) Date de publication de la demande: 04.01.2012
(73) Titulaire: COMMISSARIAT A L'ENERGIE ATOMIQUE ET AUX ENERGIES ALTERNATIVES, 75015 Paris (FR)
(72) Inventeur: GUILHAMAT, Bernard, F-38590 Saint Michel de Saint Geoirs (FR); DAUVE, Sebastien, F-38330 Biviers (FR); FERNANDEZ, Jonathan, F-38400 Saint-Martin-d'Heres (FR); MARQUET, Florent, F-38220 Saint Jean de Vault (FR)
(74) Mandataire: Lebkiri, Alexandre
(86) Numéro de dépôt international: PCT/FR2010/050320
(87) Numéro de publication internationale: WO 2010/097549

(56) Documents cités:
- DE-A1- 10 104 690
- GB-A- 2 374 143
- US-A- 5 263 324
- US-B1- 7 237 380

## Description

La présente invention concerne un dispositif actionneur comportant un élément thermostatique à cire dilatable permettant notamment la distribution sélective et/ou la régulation d'un débit d'un liquide caloporteur.

L'invention trouve une application particulièrement intéressante dans le domaine automobile notamment dans un circuit de refroidissement d'un moteur thermique, électrique ou encore hybride, de véhicule automobile. Un autre domaine d'application de l'invention est celui de la domotique avec la régulation des liquides circulant par exemple dans les chauffages domestiques. Un tel circuit est parcouru par un liquide caloporteur circulant en circuit fermé sous l'action d'une pompe afin de réguler thermiquement et d'optimiser le fonctionnement du moteur.

Pour permettre cette régulation thermique du moteur, le liquide caloporteur traverse le circuit de refroidissement qui inclut plusieurs branches :
- une première branche comportant un échangeur thermique en façade du véhicule, couramment appelé radiateur ;
- une deuxième branche comportant un deuxième échangeur thermique au niveau de l'habitacle, couramment appelé aérotherme, et ;
- une troisième branche de dérivation qui constitue une dérivation du radiateur de refroidissement, couramment appelée « by-pass ».

Un tel circuit de refroidissement peut également comporter d'autres branches comprenant par exemple un bocal de dégazage ou d'autres échangeurs thermiques tels que des échangeurs eau/huile ou eau/air couramment appelés échangeurs de suralimentation.

Le refroidissement de la structure d'un moteur à combustion interne est une fonction essentielle pour prémunir le moteur de toute avarie d'origine thermique.

Les circuits de refroidissement connus régulent généralement la température de la structure du moteur par l'intermédiaire d'un élément thermostatique, également appelé thermostat, à deux positions : ouverte ou fermée. Son changement d'état dépend de la température du liquide caloporteur dans lequel il baigne par rapport à un seuil de température pré-réglé en usine et figé pour la durée de vie du moteur.

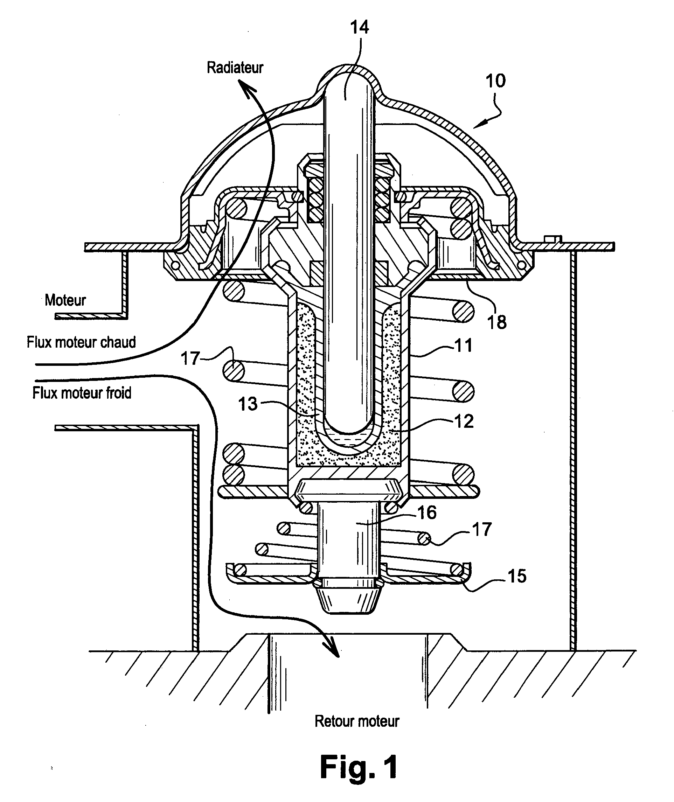

La figure 1 illustre un exemple de thermostat 10 connu à dilatation de cire formé d'une cartouche de laiton 11 remplie d'une cire dilatable 12, typiquement un mélange de cire de pétrole et de poudre de cuivre, se dilatant lorsque la température augmente, d'un moyen d'étanchéité 13 (typiquement un joint), d'un piston 14, d'un clapet principal 18 et d'un clapet « by-pass » 15 solidaire d'un actionneur 16, les clapets 18 et 15 pouvant être remis en position initiale au moyen de ressorts 17.

Le principe de fonctionnement est le suivant : lorsque la température de la cire 12 atteint une valeur seuil, la cire se liquéfie, se dilate et vient exercer une force de poussée sur le piston 14. Le piston 14 étant maintenu fixe dans le thermostat 10, la cartouche de laiton 11 se déplace par réaction en déplaçant l'actionneur 16 solidaire du clapet « by-pass » 15, de sorte que la branche « by-pass » est obturée par le déplacement du clapet 15. Simultanément à l'obturation de la branche « by-pass », le clapet principal 18 se déplace de façon à libérer la branche radiateur et à permettre la circulation du liquide caloporteur vers le radiateur.

A cet effet, la figure 1 illustre le flux du fluide caloporteur circulant au travers du thermostat 10 selon les positions des clapets 15, 18. Ainsi, lorsque le thermostat 10 est dans sa position initiale, le clapet principal 18 obture la branche du radiateur et le flux de fluide caloporteur correspond au flux « moteur froid ». En revanche, lorsque la température du fluide caloporteur a atteint la valeur seuil, le thermostat 10 change d'état : le clapet « by-pass » obture la branche « by-pass » et la branche radiateur est libérée ; le flux de fluide caloporteur correspondant dans ce cas au flux « moteur chaud » illustré en figure 1.

Ce principe simple et robuste permet d'utiliser ce type de thermostat 10 dans tout type de circuit caloporteur nécessitant une régulation. L'inconvénient majeur des thermostats décrits ci-dessus réside dans le fait que ces dispositifs ont leur état d'ouverture figé à un unique seuil de température par le mélange de la cire dilatable 12 qu'ils comportent et ceci pour toute la durée de vie du moteur.

DE 101 04 690 A est considéré comme étant l'état de la technique le plus proche de l'objet de la revendication 1.

Or, avec l'évolution des normes antipollution et les besoins de réduction de consommation en carburant, la stratégie de contrôle moteur s'oriente de plus en plus vers une régulation en continue des paramètres de fonctionnement du moteur, en particulier sa température.

Pour palier cet inconvénient et mieux répondre aux normes antipollution, il a été développé des thermostats comportant une résistance intégrée dans le piston à l'intérieur de la cartouche en laiton. L'ajout d'une telle résistance permet de dilater la cire et de provoquer le changement d'état du thermostat avant que le liquide caloporteur sortant de la culasse ait atteint la température seuil.

L'ouverture prématurée du thermostat permet notamment de réduire la consommation de carburant du véhicule ainsi que d'anticiper le refroidissement du moteur lorsqu'un calculateur détecte une augmentation de charge du moteur risquant de provoquer une surchauffe de celui-ci.

Cependant, les dispositifs actionneurs connus ne permettent toutefois pas de contrôler précisément l'ouverture de la vanne et doser la quantité de liquide caloporteur passant par cette ouverture.

Avec ce type de dispositif, avec ou sans résistance, le piston se déplace complètement afin de déplacer le clapet et de dégager l'entrée qu'il obstrue en position fermée lorsque la température seuil est atteinte.

Pour contrôler plus précisément l'ouverture de la vanne, des vannes entièrement commandées électriquement ne comportant pas de cire dilatable ont été développées. Cependant, ce type de vanne commandée électriquement ne permet pas d'assurer de façon fiable une ouverture de la vanne, le dispositif électrique d'ouverture pouvant tomber en panne. La panne d'une telle vanne peut par exemple occasionner une surchauffe excessive d'un moteur à combustion interne conduisant à des avaries moteurs pouvant aller jusqu'à la casse du moteur.

Dans ce contexte, la présente invention a pour but de fournir un dispositif actionneur de conception simple, fiable et permettant de commander avec précision l'ouverture d'une vanne et de contrôler précisément la quantité de liquide caloporteur à refroidir dans un circuit de refroidissement.

A cette fin, l'invention propose un dispositif actionneur comportant :
- un boîtier renfermant une matière dilatable ;
- une partie mobile en translation sous l'action de la dilatation et/ou de la contraction de ladite matière dilatable ;
- des moyens pour chauffer ladite matière dilatable ;
ledit dispositif étant caractérisé en ce qu'il comporte :
- un capteur de position mesurant une position courante de ladite partie mobile ;
- des moyens de positionnement de ladite partie mobile comportant des moyens de commande agissant sur lesdits moyens pour chauffer ladite matière dilatable en fonction de ladite position courante mesurée.

Grâce à l'invention, il est possible de commander précisément la position de l'élément mobile du dispositif actionneur en contrôlant les moyens pour chauffer la matière dilatable.

La position courante de la partie mobile du dispositif est mesurée par le capteur de position puis comparée à une position de référence (donnée par un calculateur) via les moyens de positionnement. Les moyens de positionnement pilotent alors les moyens de chauffage de la matière dilatable, la dilatation de la matière dilatable influant sur la position de la partie mobile si la position courante de la partie mobile est différente de la position de référence.

Ainsi, selon l'invention, il est possible de mieux contrôler le refroidissement d'un moteur thermique par exemple par le contrôle précis de l'ouverture et/ou de la fermeture des clapets obturant les entrées de circulation d'un liquide caloporteur. Le contrôle moteur est ainsi mieux maitrisé, permettant par exemple de refroidir de façon optimum le moteur et de réduire la consommation du véhicule.

Le dispositif selon l'invention peut également présenter une ou plusieurs des caractéristiques ci-dessous, considérées individuellement ou selon toutes les combinaisons techniquement possibles :
- lesdits moyens de positionnement comporte une entrée apte à recevoir un signal représentatif d'une position de référence de ladite partie mobile, lesdits moyens de commande agissant sur lesdits moyens pour chauffer ladite matière dilatable de sorte que la variation de température de la matière dilatable entraîne le passage de ladite partie mobile de sa position courante à ladite position de référence ;
- ledit capteur de position est un capteur inductif formé par une bobine primaire d'excitation, deux bobines secondaires de détection et par un noyau ferromagnétique solidaire de ladite partie mobile ;
- lesdits moyens de positionnement comportent :
   - des moyens pour générer un signal d'excitation injecté aux bornes de ladite bobine primaire d'excitation ;
   - des moyens de détection synchrone pour déterminer l'amplitude du signal de sortie aux bornes desdites bobines secondaires de détection ;
   - des moyens de comparaison de l'amplitude dudit signal de sortie par rapport à une valeur de consigne correspondant à ladite position de référence ;
   lesdits moyens de commande agissant sur lesdits moyens pour chauffer jusqu'à ce que ladite amplitude dudit signal de sortie soit égale à ladite valeur de consigne ;
- la position dudit noyau ferromagnétique varie linéairement avec ledit signal de sortie aux bornes desdites bobines secondaires de détection ;
- ledit dispositif comporte une entretoise réalisée dans un matériau amagnétique, ladite entretoise assurant la liaison entre ladite partie mobile et ledit noyau ferromagnétique ;
- ledit capteur de position est un capteur inductif de type DVRT ;
- ledit capteur de position est un capteur capacitif formé par des condensateurs cylindriques ou des condensateurs plans ;
- ledit capteur de position est formé par une pluralité de capteurs optiques mesurant ladite position courante de ladite partie mobile au moyen d'une règle optique ;
- ledit capteur de position est un capteur de pression ;
- ledit capteur de position est une jauge de déformation ;
- ladite matière dilatable est un mélange de cire ou un mélange d'alcool ;
- ledit dispositif comporte des moyens de refroidissement de ladite matière dilatable tels qu'un dispositif à effet Peltier.

L'invention a également pour objet une vanne thermostatique comportant un dispositif actionneur selon l'invention et au moins deux accès dont au moins un accès est obturable par ladite partie mobile par translation de ladite partie mobile.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une représentation schématique d'un dispositif thermostatique de type vanne à dilation de cire selon l'état de la technique ;
- les figures 2-A et 2-B représentent une vue d'ensemble d'un premier mode de réalisation d'un dispositif actionneur thermostatique selon l'invention ;
- les figures 3-A et 3-B illustrent le principe de fonctionnement d'un capteur LVDT d'un dispositif actionneur thermostatique selon l'invention tel que représenté en figures 2-A et 2-B ;
- la figure 4 illustre un schéma synoptique de commande d'un dispositif actionneur thermostatique tel que représenté en figures 2-A et 2-B ;
- la figure 5 illustre un exemple de variation de l'amplitude de la tension de sortie du capteur LVDT tel que représenté aux figures 3-A et 3-B en fonction du déplacement du noyau magnétique du dispositif actionneur thermostatique représenté en figures 2-A et 2-B ;
- la figure 6 illustre un deuxième mode de réalisation d'un dispositif actionneur thermostatique selon l'invention ;
- la figure 7 illustre un troisième mode de réalisation d'un dispositif actionneur thermostatique selon l'invention ;
- Les figures 8-A et 8-B illustrent un quatrième mode de réalisation d'un dispositif actionneur thermostatique selon l'invention.

Dans toutes les figures, les éléments communs portent les mêmes numéros de référence.

La figure 1 a déjà été décrite précédemment en référence à la présentation de l'état de la technique.

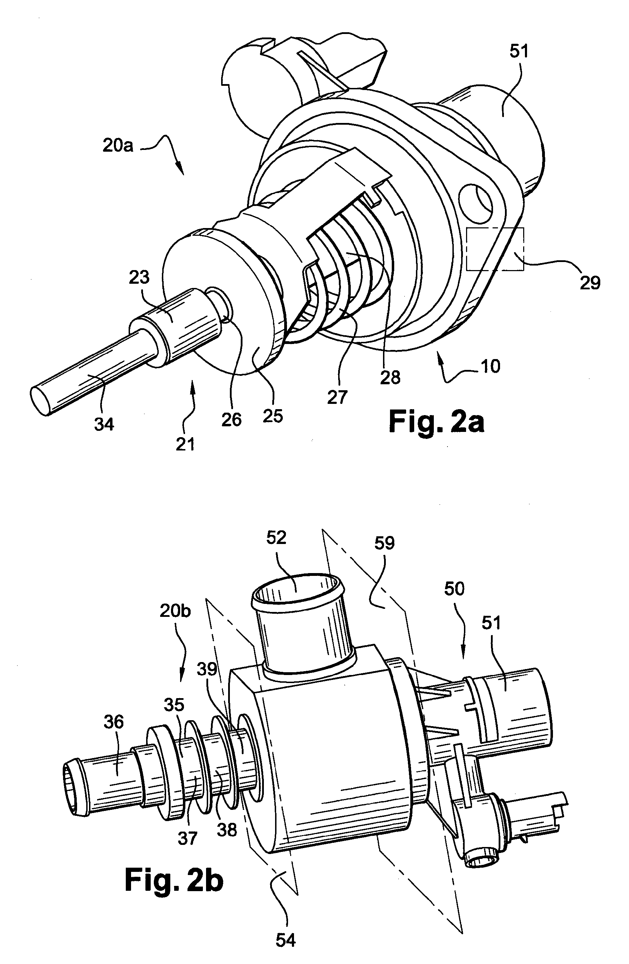

Les figures 2-A et 2-B illustrent respectivement la partie interne 20a et la partie externe 20b d'un dispositif actionneur thermostatique selon un premier mode de réalisation de l'invention.

La partie interne 20a du dispositif actionneur comporte :
- une cartouche 28, typiquement en laiton, remplie d'une matière dilatable, typiquement un mélange de cire de pétrole et de poudre de cuivre, se dilatant lorsque la température augmente et exerçant une force de poussée sur un piston interne qui par réaction déplace transversalement la cartouche 28 ; la cire dilatable étant séparée du piston interne au moyen d'un moyen d'étanchéité de type joint non représenté ;
- des moyens de chauffage, non représentés, de la cire dilatable intégré dans le piston interne, typiquement une résistance chauffante ;
- un actionneur 26 solidaire de la cartouche 28, se déplaçant en translation lorsque la cire se dilate ;
- un clapet 25 de dérivation, appelé clapet « by-pass » solidaire de l'actionneur 26 ;
- un ressort de rappel 27 permettant de remettre en position initiale la cartouche 28 ainsi que l'actionneur 26 lorsque la cire dilatable se contracte ;
- un noyau ferromagnétique 34 solidaire de l'actionneur 26 et du clapet 25 ;
- une entretoise amagnétique 23 solidarisant le noyau ferromagnétique 34 à l'actionneur 26 et au clapet by-pass 25.

La figure 2-B illustre la partie externe 20b du dispositif selon l'invention intégré dans un dispositif 50 de régulation de la circulation de liquide caloporteur dans les différentes branches constituant le circuit de refroidissement. A cet effet, le dispositif 50 comporte également :
- une première tuyauterie 51 apte à être raccordée à une branche du circuit de refroidissement comportant un échangeur thermique de type radiateur ;
- une deuxième tuyauterie 52 apte à être raccordée au moteur recevant le liquide caloporteur chaud sortant du moteur ;
- une troisième tuyauterie de dérivation, dite tuyauterie by-pass 36, apte à être raccordée à une branche by-pass de dérivation du radiateur de refroidissement.

La partie externe 20b du dispositif, selon l'invention, est formée par :
- un support externe 35 fixe, de forme sensiblement cylindrique, comportant trois emplacements 37, 38, 39 sur lesquels des bobines inductrices (non représentées) sont bobinées.

La partie interne 20a et la partie externe 20b du dispositif sont agencées de sorte que les plans de joint 29 et 59 se trouvent confondus et de sorte que le noyau ferromagnétique 34 se déplace principalement à l'intérieur du support externe 35 comportant les bobines inductrices. Le principe de fonctionnement du dispositif actionneur est le suivant : lorsque la température de la cire dilatable atteint une valeur seuil, la cire se liquéfie, se dilate et vient exercer une force de poussée le piston interne. Le piston interne étant maintenu fixe dans le dispositif actionneur, la cartouche de laiton 28 se déplace par réaction en déplaçant l'actionneur 26 solidaire du clapet « by-pass » 25 et du noyau ferromagnétique 34, de sorte que la tuyauterie by-pass 36 est obturée par le déplacement du clapet 25 à l'intérieur du dispositif 50.

Le noyau ferromagnétique 34 se déplace transversalement à l'intérieur de la partie externe 20b formée par le support externe 35 de forme cylindrique.

Le déplacement de l'actionneur 26 et du clapet by-pass 25 par l'augmentation de la température de la cire dilatable fait passer le dispositif actionneur d'une position initiale à une position finale dans laquelle le clapet by-pass 25 vient obturer le passage vers la tuyauterie by-pass 36 en se déplaçant sensiblement au niveau du plan de joint 54 illustré en figure 2-B.

Le noyau ferromagnétique 34 mobile à l'intérieur de la partie externe 20b et les bobines inductrices (non représentées) fixes forment ainsi un capteur de position inductif de type transformateur différentiel à variation linéaire ou LVDT (Linear Variable Differential Transformer en langue anglaise). D'une façon générale, un capteur LVDT est un capteur électrique passif de déplacements linéaires formé par un transformateur et un noyau ; sa réponse étant proportionnelle au déplacement du noyau dans le cylindre formé par le transformateur.

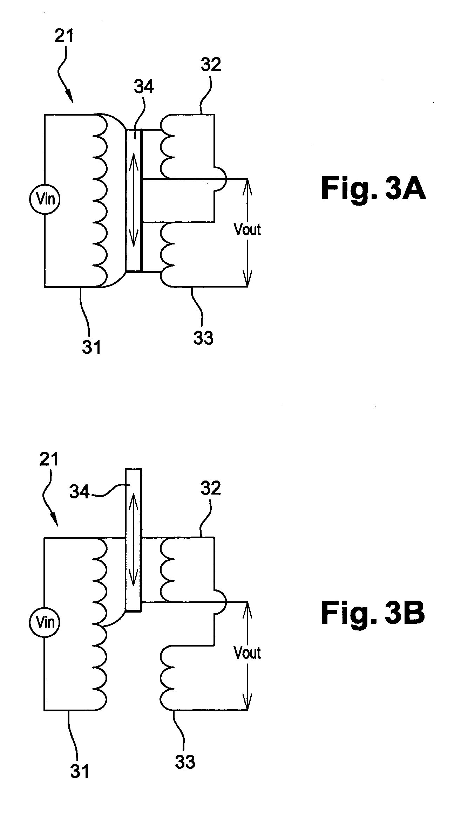

Le principe de fonctionnement d'un capteur LVDT 21 est illustré en référence aux figures 3-A et 3-B. Le transformateur du capteur LVDT 21 est formé par trois bobines cylindriques coaxiales fixes : une bobine primaire 31 d'excitation et deux bobines secondaires 32 et 33 ; le noyau étant formé par le noyau ferromagnétique 34, également appelé armature, coulissant à l'intérieur du cylindre formé par les bobines 31, 32, 33.

On applique une tension d'entrée périodique Vᵢₙ, généralement sinusoïdale, sur la bobine primaire 31 et on mesure la tension de sortie Vₒᵤₜ des bobines secondaires 32 et 33 ; les deux bobines secondaires étant connectées en opposition. En position centrale du noyau 34, telle que représentée à la figure 3-A, la tension aux bornes de chaque bobine secondaire 32, 33 est identique, cependant les bobines étant connectées en opposition, la tension de sortie Vₒᵤₜ est égale à zéro.

La figure 3-B illustre le noyau ferromagnétique 34 se déplaçant de la position centrale vers une première position extrême correspondant soit à l'ouverture complète du clapet by-pass 25 ou soit à la fermeture complète dudit clapet by-pass 25. Le noyau ferromagnétique 34 peut également se déplacer vers une deuxième position extrême (non représentée), opposée transversalement à la première position extrême, et correspondant à la fermeture complète du clapet by-pass 25 si la première position extrême correspond à l'ouverture complète du clapet by-pass 25 et inversement.

Dans cette nouvelle position, illustrée en figure 3-B, le noyau 34 modifie la distribution du champ magnétique des deux bobines secondaires et par conséquent le signal de sortie Vₒᵤₜ. Ainsi, la tension de sortie Vₒᵤₜ varie de façon continue avec le déplacement du noyau ferromagnétique 34 entre la première position extrême et la deuxième position extrême.

Le capteur de position LVDT 21 présente ainsi une linéarité particulièrement intéressante permettant de corréler un déplacement du noyau 34 avec une tension de sortie Vₒᵤₜ générée, ce qui permet d'utiliser ce principe de détection dans le dispositif thermostatique selon l'invention. En effet, la linéarité du capteur de position 21 permet de contrôler précisément l'ouverture et/ou la fermeture du clapet 25 mais également la position de l'actionneur 26 sur toute sa plage d'utilisation.

En application de ce qui précède au dispositif selon l'invention, les bobines 31, 32, 33 sont adaptées concentriquement sur le support externe 35 cylindrique et plus précisément respectivement au niveau des emplacements 37, 38, 39 ; la bobine primaire 31 d'excitation comporte n1 nombre de spires et est bobinée au niveau de l'emplacement 38 entre les deux bobines secondaires 32 et 33 comportant chacune n2 nombre de spires. Le noyau ferromagnétique 34 solidaire de l'actionneur 26 et du clapet 25 by-pass est mobile à l'intérieur du support externe 35 sur lequel les bobines 31, 32, 33 sont bobinées.

Le noyau ferromagnétique 34 solidaire de l'actionneur 26 est plongé dans le flux du liquide caloporteur de la branche by-pass. Avantageusement, le noyau ferromagnétique 34 est réalisé dans un matériau permettant de résister au liquide caloporteur composé typiquement d'un mélange d'eau et d'éthylène de glycol et d'un inhibiteur de corrosion, dans le cas de l'utilisation du dispositif actionneur dans la gestion du refroidissement d'un moteur de véhicule automobile.

L'entretoise amagnétique 23 a une longueur variable permettant d'ajuster la position initiale du noyau ferromagnétique 34 par rapport aux bobines 31, 32, 33 et de garantir pour les positions extrêmes, de l'actionneur 26 et des clapets 25, l'utilisation de la plage de linéarité du capteur LVDT.

L'entretoise amagnétique 23 permet également d'isoler et d'éloigner l'environnement métallique se situant à proximité du noyau ferromagnétique 34.

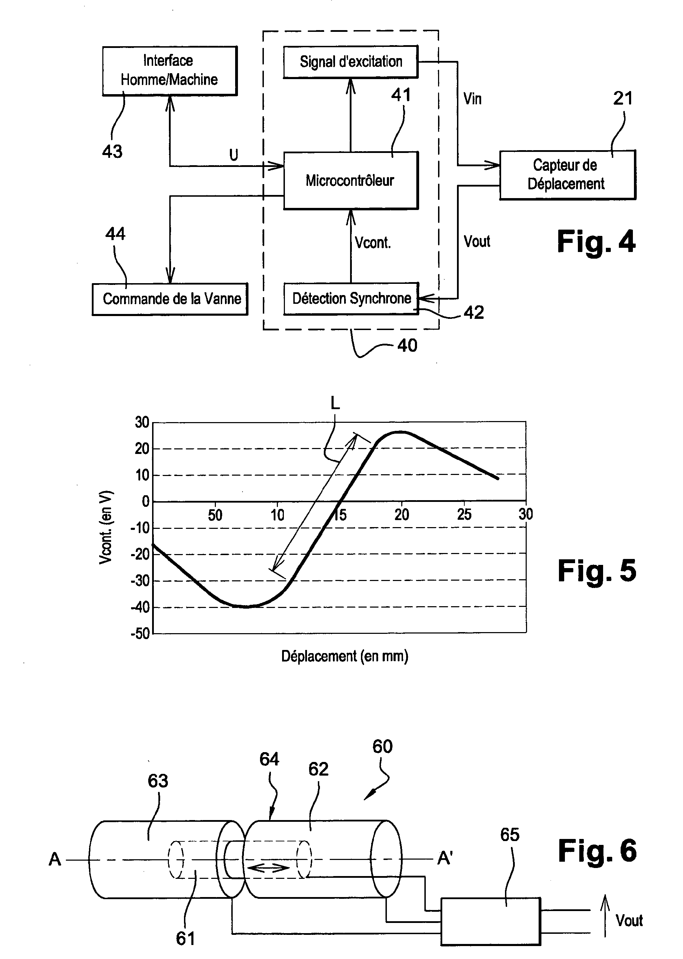

La figure 4 illustre un schéma synoptique des moyens de commande d'un dispositif actionneur thermostatique tel que représenté en figures 2-A et 2-B.

Les moyens de commande 40 sont formés par un microcontrôleur 41, ou toute autre électronique de commande comme par exemple un calculateur de bord, comportant une entrée apte à recevoir un signal provenant d'une interface homme/machine 43 ou d'un calculateur embarqué. Le microcontrôleur 41 génère un signal d'excitation, avantageusement de type triangulaire qui correspond à la tension d'entrée Vᵢₙ d'excitation de la bobine primaire 31 du capteur LVDT. Le signal d'excitation peut être indifféremment un signal de type sinusoïdal, triangulaire ou encore rectangulaire.

Le signal sortant du capteur LVDT 21 est un signal de type sinusoïdale périodique et correspond à la tension de sortie Vₒᵤₜ aux bornes des bobines secondaires 32, 33. Ce signal de sortie est ensuite traité via des moyens 42 par détection synchrone à la même fréquence que le signal d'excitation, ce qui permet d'obtenir une tension continue V_{cont} proportionnelle à l'amplitude du signal de sortie Vₒᵤₜ.

La tension continue V_{cont} est ensuite numérisée puis réinjectée dans le microcontrôleur 41 afin d'être comparée à une tension de consigne U provenant de ladite interface homme/machine 43, ladite tension de consigne U étant représentative d'une position consigne ou référence du noyau ferromagnétique 34, et par conséquent d'une position d'ouverture particulière du clapet by-pass 25.

Si la tension continue V_{cont} correspond à la tension consigne U alors les moyens de commande 40 via le microcontrôleur 41 commande l'arrêt de l'alimentation des moyens de chauffage 44 de la cire dilatable.

A l'inverse, si la tension continue V_{cont} ne correspond pas à la tension consigne U c'est-à-dire si la position du clapet by-pass 25 ne correspond pas à la position consigne, alors les moyens de commande 40 continue d'alimenter les moyens de chauffage 44 afin d'augmenter la dilatation de la cire de façon à provoquer une translation supplémentaire de l'actionneur 26 et du clapet by-pass 25 ou continue de ne pas alimenter les moyens de chauffage 44 ; le choix de chauffage ou de non chauffage de la cire dilatable dépendant de la position relative de l'actionneur 26 et du clapet by-pass 25 par rapport à la position consigne fixée via l'interface homme/machine 43.

Un exemple de variation de l'amplitude de la tension de sortie du capteur LVDT tel que représenté aux figures 3-A et 3-B en fonction du déplacement du noyau magnétique du dispositif actionneur thermostatique représenté en figures 2-A et 2-B, est illustré en figure 5.

La variation illustrée, en figure 5, comporte une partie linéaire L sur laquelle on exploitera préférentiellement le dispositif selon l'invention, notamment par les moyens de commande 40.

Dans cette partie linéaire L, à chaque valeur d'amplitude V_{cont} correspond une position relative du noyau ferromagnétique 34. La variation linéaire pour un capteur LVDT comportant un bobinage homogène est de l'ordre de ±1% pour un déplacement du noyau ferromagnétique 34 de l'ordre de 15mm. Cette variation linéaire pourra toutefois être augmentée en optimisant la répartition des spires sur la surface des bobines.

Ainsi, le dispositif selon l'invention permet de contrôler précisément la position relative de l'actionneur 26 ainsi que l'ouverture et/ou la fermeture du clapet 25 du dispositif en fonction de différentes situations.

Dans une application automobile, le dispositif selon l'invention permet d'obtenir un contrôle moteur plus efficace, notamment par le contrôle précis et connu des débits de liquide caloporteur à refroidir.

Selon une variante de ce premier exemple de réalisation décrit avantageusement avec un capteur de position inductif de type LVDT, le noyau ferromagnétique 34 mobile à l'intérieur de la partie externe 20b peut être remplacé par un barreau de matériau non magnétique conducteur, tel que par exemple du cuivre, du laiton, ou encore de l'aluminium. On choisira préférentiellement un matériau comportant une faible résistivité de façon à obtenir un bon couplage. Avantageusement, le cuivre ou encore le laiton seront des matériaux préférés par rapport à des matériaux non magnétiques conducteurs plus onéreux.

Dans ce cas, les bobines inductrices créant un champ magnétique induisent un couplage par courant de Foucault traversant le matériau non magnétique conducteur. En conservant la structure du capteur LVDT, telle que décrite précédemment, avec les bobines inductrices, et en ajoutant un barreau en laiton en remplacement du noyau ferromagnétique 34, on obtient alors un capteur avec une perte de sensibilité de l'ordre de 50% par rapport au capteur LVDT, ce qui reste satisfaisant pour une application dans un dispositif actionneur thermostatique de véhicule automobile.

Dans cette variante, la structure du capteur LVDT décrite reste identique à quelques modifications du microcontrôleur près qui sont nécessaires pour modifier les réglages de gains et de la phase de détection (décalage de la phase de 90 °), les fréquences et les courants d'excitation restant identiques.

Le premier exemple de réalisation de l'invention a été décrit avantageusement avec un capteur de position inductif de type LVDT ; toutefois, le dispositif actionneur selon l'invention, peut comporter d'autres types de capteur inductif formés, par exemple par un circuit accordé de type RLC ou encore par un DVRT (Differential Variable Reluctance Transducer en langue anglaise) comportant une unique bobine réalisant à la fois l'excitation et la détection.

La figure 6 illustre un deuxième mode de réalisation d'un dispositif actionneur thermostatique selon l'invention.

Dans ce deuxième mode de réalisation, le dispositif selon l'invention reprend les principales caractéristiques du dispositif actionneur décrit précédemment.

Selon ce deuxième mode de réalisation, le dispositif actionneur comporte:
- une cartouche (non représentée), typiquement en laiton, remplie d'une matière dilatable, typiquement un mélange de cire de pétrole et de poudre de cuivre, se dilatant lorsque la température augmente et exerçant une force de poussée sur un piston interne qui par réaction déplace transversalement la cartouche ; la cire dilatable étant séparée du piston interne au moyen d'un moyen d'étanchéité de type joint non représenté ;
- des moyens de chauffage, non représentés, de la cire dilatable intégrée dans le piston interne, typiquement une résistance chauffante ;
- un actionneur solidaire de la cartouche, se déplaçant en translation lorsque la cire se dilate ;
- un clapet by-pass solidaire de l'actionneur ;
- un ressort de rappel permettant de remettre en position initiale la cartouche ainsi que l'actionneur lorsque la cire dilatable se contracte ;
- un condensateur cylindrique 64 comportant deux armatures fixes 62, 63 et une armature 61 mobile, solidaire de l'actionneur et du clapet by-pass ; les armatures fixes 62, 63 formant un cylindre dans lequel l'armature 61 mobile se translate en fonction des mouvements de l'actionneur.

Le condensateur cylindrique 64 forme un capteur de position 60 de type capacitif à surfaces variables et dont l'armature 61 est mobile le long de l'axe des cylindres des armatures 62, 63.

Les capacités formées entre ces armatures varient de manière opposée au déplacement de l'armature 61 mobile à l'intérieur du cylindre 64, c'est-à-dire de manière opposée au déplacement de l'actionneur ou du clapet by-pass du dispositif actionneur selon l'invention ; l'actionneur se déplaçant selon l'axe AA' représenté.

La mesure des capacités entre les armatures est réalisée par un circuit intégré spécifique 65 ASIC (pour Application Specific Integrated Circuit en langue anglaise), le circuit intégré 65 fournissant une tension de sortie Vₒᵤₜ en fonction de la position de l'armature 61, l'armature 61 étant solidaire de l'actionneur du dispositif actionneur. Ainsi, un capteur capacitif 60, tel que décrit, peut être intégré dans le principe synoptique décrit précédemment en référence à la figure 4 afin de contrôler l'ouverture/fermeture des clapets du dispositif selon l'invention. On notera toutefois que dans ce deuxième mode de réalisation, les moyens 42 de détection synchrone, du schéma synoptique illustré en figure 4, sont remplacés par un dispositif couramment utilisé dans la lecture d'accéléromètre sous la forme d'un circuit intégré spécifique ou ASIC.

Dans ce deuxième mode de réalisation, le capteur de position 60 capacitif est principalement formé par des condensateurs cylindriques, toutefois, le capteur de position capacitif peut être formé indifféremment par des condensateurs plans ou cylindriques fonctionnant indifféremment sur le principe de surfaces variables ou d'écartement variables.

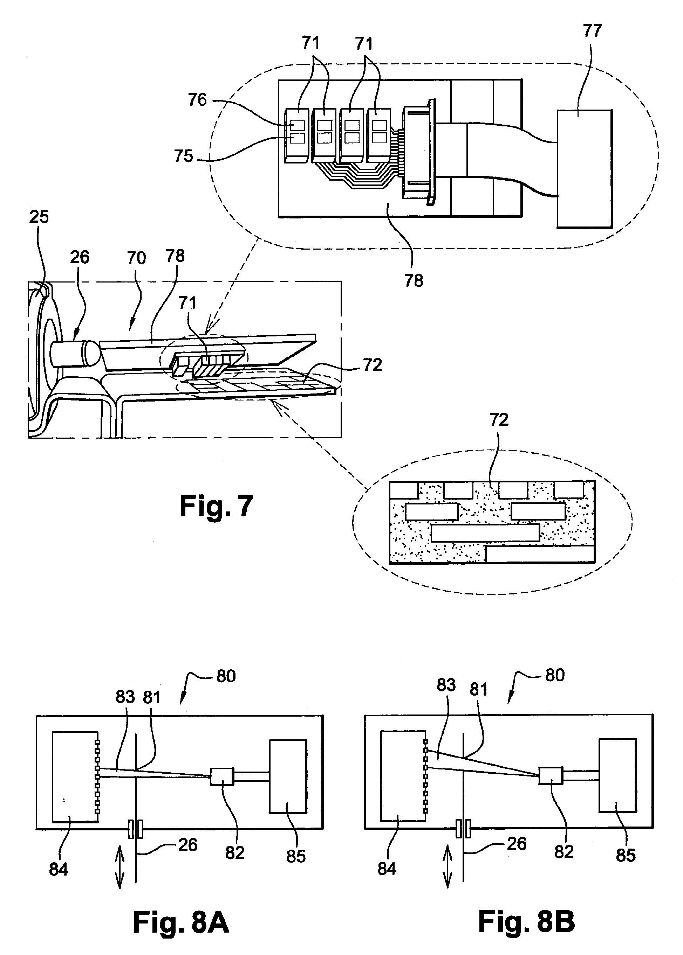

La figure 7 illustre un troisième mode de réalisation d'un dispositif actionneur thermostatique selon l'invention.

Dans ce troisième mode de réalisation, le dispositif selon l'invention reprend les principales caractéristiques du dispositif actionneur décrit précédemment en figures 2-A et 2-B.

Selon ce troisième mode de réalisation, le dispositif actionneur comporte :
- une cartouche (non représentée), typiquement en laiton, remplie d'une matière dilatable, typiquement un mélange de cire de pétrole et de poudre de cuivre, se dilatant lorsque la température augmente et exerçant une force de poussée sur un piston interne qui par réaction déplace transversalement la cartouche ; la cire dilatable étant séparée du piston interne au moyen d'un moyen d'étanchéité de type joint non représenté ;
- des moyens de chauffage, non représentés, de la cire dilatable intégré dans le piston interne, typiquement une résistance chauffante ;
- un actionneur 26 solidaire de la cartouche, se déplaçant en translation lorsque la cire se dilate ;
- un clapet by-pass 25 solidaire de l'actionneur ;
- un ressort de rappel permettant de remettre en position initiale la cartouche ainsi que l'actionneur lorsque la cire dilatable se contracte ;
- une pluralité de capteurs numériques optiques 71 assemblées sur un circuit imprimé 78, ledit circuit imprimé 78 étant solidaire de l'actionneur 26 mobile en translation ;
- une règle optique 72 fixe.

Dans ce troisième mode de réalisation du dispositif selon l'invention, la pluralité de capteurs numériques optiques 71 et la règle optique 72 forment un capteur de position 70 de type capteur optique.

La pluralité de capteurs numériques optiques 71 mesure le déplacement relatif de l'actionneur 26 au moyen de la règle optique 72 via un codage absolu. La règle optique 72 est codée sur 4 bits et comporte seize positions différentes lues par les capteurs numériques optiques 71.

Le codage de la règle 72 est réalisé au moyen d'un code binaire de type code Gray, ou un autre type de code, le code Gray consistant à coder une pluralité de positions par un codage binaire de sorte que lors d'un passage d'une position à une position consécutive un seul bit est modifié.

Selon un mode particulier de réalisation de l'invention, l'état binaire 0 de la règle numérique est réalisé par un trait de codage noir et l'état binaire 1 est réalisé par un trait de codage blanc.

Chaque capteur numérique optique 71 est formé par une diode d'émission 75 émettant de la lumière de façon à éclairer ladite règle numérique 72 et par une diode de réception 76 photosensible à la lumière détectant la présence d'un trait noir ou d'un trait blanc, le blanc réfléchissant une grande partie de la lumière émise par la diode d'émission et le noir absorbant une grande partie de la lumière émise par la diode d'émission 75.

Le capteur de position 70 comporte également un microcontrôleur 77, ou un autre système de calcul, recevant l'information binaire fournie par les capteurs optiques 71 indiquant la position des capteurs et plus généralement la position du clapet du dispositif. Selon la position du clapet 25 et de l'actionneur 26, le microcontrôleur 77 détermine au moyen d'une consigne d'alimentation, le chauffage ou non via la résistance chauffante présente à l'intérieur de la cartouche en laiton du dispositif, afin de positionner le clapet selon la position consigne renseignée via l'interface homme/machine.

Ainsi, le dispositif comportant un capteur de position 70 formé par une pluralité de capteurs numériques optiques 71 permet de contrôler précisément l'ouverture et/ou la fermeture de l'actionneur 26 ainsi que du clapet by-pass 25 du dispositif par le contrôle de la température de la cire dilatable via les moyens de chauffage en fonction de différentes situations du moteur, la position de l'actionneur et du clapet étant déterminées par lecture optique au moyen de capteurs optiques et d'une règle numérique.

La figure 7 illustre particulièrement une pluralité de capteurs numériques optiques mobiles 71 solidaires de l'actionnaire 26 du dispositif selon l'invention et une règle optique 72 fixe. Toutefois, le principe de fonctionnement décrit précédemment est également applicable pour un dispositif comportant une pluralité de capteurs numériques optiques 71 fixes et d'une règle optique 72 mobile solidaire de l'actionneur 26 du dispositif actionneur selon l'invention, l'utilisation de capteurs numériques optiques 71 fixes étant particulièrement avantageuse par rapport à l'utilisation de capteurs numériques optiques 71 mobiles, notamment pour la simplification du câblage des capteurs.

Le quatrième mode de réalisation illustré aux figures 8-A et 8-B est une variante du mode de réalisation décrit en référence à la figure 7 ; le dispositif selon l'invention reprenant les principales caractéristiques du dispositif actionneur décrit précédemment.

Dans ce quatrième mode de réalisation, le capteur de position optique 80 est réalisé au moyen d'une fente mobile 81 solidaire de l'actionneur 26 et d'un moyen d'éclairage formé par une diode électroluminescente 82 produisant un faisceau de lumière 83 passant au travers de ladite fente mobile 81 éclairant un banc de photodiodes 84 avec une largeur de faisceau spécifique. La position du faisceau de lumière 83 sur le banc de photodiodes 84 permet ainsi, via un microcontrôleur 85, de déterminer la position absolue de la fente mobile 81 ainsi que de la position de l'actionneur 26 du dispositif.

Selon un cinquième mode de réalisation de l'invention, le dispositif actionneur comporte un capteur de position de type capteur de pression. Avantageusement, le capteur de pression est disposé sur l'axe de poussée de l'actionneur dans une cavité comportant un mélange air/huile et dont le volume varie avec le mouvement de l'actionneur.

Selon un sixième mode de réalisation de l'invention, le dispositif actionneur comporte un capteur de position de type jauge de contrainte. La jauge de contrainte est placée sur la structure du dispositif et mesure la déformation de celle-ci en fonction de la poussée de l'actionneur du dispositif par variation de sa résistance. La jauge de contrainte étant intégrée dans une branche d'un pont de Wheatstone, la tension de sortie du pont de Wheatstone est variable en fonction de la déformation de la structure et donc de la position de l'actionneur ainsi que de l'ouverture et/ou fermeture du clapet by-pass.

Ainsi, le dispositif actionneur comportant un capteur de position selon l'invention permet d'une part de contrôler précisément l'ouverture et/ou la fermeture de l'actionneur ainsi que les clapets du dispositif en fonction de différentes situations du moteur.

Le contrôle de l'ouverture/fermeture du dispositif permet de contrôler plus efficacement les réglages du moteur, notamment par le contrôle des débits de liquide caloporteur à refroidir.

Le contrôle de l'actionneur du dispositif permet de commander avec précision la position de l'actionneur et ainsi l'ouverture des clapets sur toute la plage d'ouverture des clapets, et ceci avant d'atteindre la position extrême d'ouverture du clapet. La précision de la position d'ouverture est de l'ordre de 1 centième de la plage totale d'ouverture du clapet. Le dispositif actionneur selon l'invention permet également de conserver un fonctionnement nominal fiable garantissant l'ouverture et/ou la fermeture des clapets lorsque la température seuil du liquide caloporteur est atteinte, par l'utilisation d'une matière dilatable se dilatant à partir d'une température seuil.

Le dispositif actionneur tel que décrit peut être utilisé avantageusement dans des moteurs à combustion interne de véhicule automobile afin de provoquer l'ouverture et/ou la fermeture d'une vanne d'un circuit de refroidissement, d'air, de carburant, d'huile. Cependant, le dispositif selon l'invention est également applicable en domotique par exemple pour l'ouverture de vannes, de volets et de système de régulation d'un débit de fluide.

Le dispositif actionneur thermostatique utilisé notamment dans les circuits de refroidissements des moteurs à combustion interne de véhicule automobile permet de régler la température du liquide caloporteur introduit dans le moteur pour en optimiser le fonctionnement, en agissant sur l'introduction d'un débit de liquide dit « froid » provenant du radiateur de refroidissement du véhicule et/ou de l'introduction d'un débit de liquide dit « chaud » provenant du moteur, que l'on mélange pour constituer un liquide caloporteur dit « tiède » que l'on introduit dans le moteur.

L'invention a été principalement décrite avec une cartouche en laiton comportant une matière dilatable de type cire ; toutefois, l'invention est également applicable à un dispositif actionneur thermostatique comportant un cartouche contenant une matière dilatable de type mélange d'alcool.

Le dispositif selon l'invention peut comporter des moyens pour refroidir plus efficacement la cire ou la matière dilatable notamment par adjonction de moyens permettant de créer un déplacement de la chaleur en présence d'un courant électrique, par effet Peltier.

Les autres avantages de l'invention sont notamment les suivants :
- facilité de mise en oeuvre ;
- respect des contraintes mécaniques d'encombrement imposées ;
- stabilité temporelle de la réponse d'ouverture des clapets assurée par la simplicité du dispositif.

## Revendications

1. Dispositif actionneur (20a, 20b) comportant :
- un boîtier (28) renfermant une matière dilatable ;
- une partie mobile (26) en translation sous l'action de la dilatation et/ou de la contraction de ladite matière dilatable ;
- des moyens (44) pour chauffer ladite matière dilatable ;
ledit dispositif étant **caractérisé en ce qu'**il comporte :
- un capteur de position (21, 60, 70, 80) mesurant une position courante de ladite partie mobile (26) ;
- des moyens de positionnement (41, 77, 85) de ladite partie mobile (26) comportant des moyens de commande agissant sur lesdits moyens (44) pour chauffer ladite matière dilatable en fonction de ladite position courante mesurée.

2. Dispositif (20a, 20b) selon la revendication 1 **caractérisé en ce que** lesdits moyens de positionnement (41, 77, 85) comporte une entrée apte à recevoir un signal représentatif d'une position de référence de ladite partie mobile (26), lesdits moyens de commande agissant sur lesdits moyens (44) pour chauffer ladite matière dilatable de sorte que la variation de température de la matière dilatable entraîne le passage de ladite partie mobile (26), de sa position courante à ladite position de référence.

3. Dispositif (20a, 20b) selon l'une des revendications 1 à 2 **caractérisé en ce que** ledit capteur de position (21) est un capteur inductif formé par une bobine primaire d'excitation (31), deux bobines secondaires de détection (32, 33) et par un noyau ferromagnétique (34) solidaire de ladite partie mobile (26).

4. Dispositif (20a, 20b) selon la revendication 3 **caractérisé en ce que** lesdits moyens de positionnement (41) comportent :
- des moyens pour générer un signal d'excitation injecté aux bornes de ladite bobine primaire d'excitation (31) ;
- des moyens de détection synchrone (42) pour déterminer l'amplitude du signal de sortie aux bornes desdites bobines secondaires de détection (32, 33) ;
- des moyens de comparaison de l'amplitude dudit signal de sortie par rapport à une valeur de consigne correspondant à ladite position de référence ;
lesdits moyens de commande agissant sur lesdits moyens (44) pour chauffer jusqu'à ce que ladite amplitude dudit signal de sortie soit égale à ladite valeur de consigne.

5. Dispositif (20a, 20b) selon l'une des revendications 3 à 4 **caractérisé en ce que** la position dudit noyau ferromagnétique (34) varie linéairement avec ledit signal de sortie aux bornes desdites bobines secondaires de détection (32, 33).

6. Dispositif (20a, 20b) selon l'une des revendications 3 à 5 **caractérisé en ce que** ledit dispositif comporte une entretoise (23) réalisée dans un matériau amagnétique, ladite entretoise (23) assurant la liaison entre ladite partie mobile (26) et ledit noyau ferromagnétique (34).

7. Dispositif (20a, 20b) selon l'une des revendications 1 à 2 **caractérisé en ce que** ledit capteur de position est un capteur inductif de type DVRT.

8. Dispositif selon l'une des revendications 1 à 2 **caractérisé en ce que** ledit capteur de position (60) est un capteur capacitif formé par des condensateurs cylindriques (62, 63) ou des condensateurs plans.

9. Dispositif selon l'une des revendications 1 à 2 **caractérisé en ce que** ledit capteur de position (70) est formé par une pluralité de capteurs optiques (71) mesurant ladite position courante de ladite partie mobile (26) au moyen d'une règle optique (72).

10. Dispositif selon l'une des revendications 1 à 2 **caractérisé en ce que** ledit capteur de position est un capteur de pression.

11. Dispositif selon l'une des revendications 1 à 2 **caractérisé en ce que** ledit capteur de position est une jauge de déformation.

12. Dispositif (20a, 20b) selon l'une des revendications 1 à 11 **caractérisé en ce que** ladite matière dilatable est un mélange de cire ou un mélange d'alcool.

13. Dispositif (20a, 20b) selon l'une des revendications 1 à 12 **caractérisé en ce qu'**il comporte des moyens de refroidissement de ladite matière dilatable tels qu'un dispositif à effet Peltier.

14. Vanne thermostatique (50) **caractérisée en ce qu'**elle comporte un dispositif actionneur (20a, 20b) selon l'une des revendications 1 à 13 et au moins deux accès (36, 51, 52) dont au moins un accès est obturable par ladite partie mobile (26) par translation de ladite partie mobile.

## Patentansprüche

1. Aktorvorrichtung (20a, 20b), die Folgendes umfasst:
- ein Gehäuse (28), das ein ausdehnbares Material umfasst;
- ein unter der Einwirkung der Ausdehnung und/oder der Zusammenziehung des ausdehnbaren Materials durch Verschiebung bewegliches Teil (26);
- Mittel (44) zum Erhitzen des ausdehnbaren Materials;
wobei die Vorrichtung **dadurch gekennzeichnet ist, dass** sie Folgendes umfasst:
- einen Positionssensor (21, 60, 70, 80), der eine aktuelle Position des beweglichen Teils (26) misst;
- Mittel (41, 77, 85) zur Positionierung des beweglichen Teils (26), die Steuerungsmittel umfassen, die auf die Mittel (44) zum Erhitzen des ausdehnbaren Materials in Abhängigkeit von der gemessenen aktuellen Position einwirken.

2. Vorrichtung (20a, 20b) nach Anspruch 1, **dadurch gekennzeichnet, dass** die Positionierungsmittel (41, 77, 85) einen Eingang umfassen, der ein Signal empfangen kann, das eine Bezugsposition des beweglichen Teils (26) darstellt, wobei die Steuerungsmittel derart auf die Mittel (44) zum Erhitzen des ausdehnbaren Materials einwirken, dass die Änderung der Temperatur des ausdehnbaren Materials die Überführung des beweglichen Teils (26) von seiner aktuellen Position in die Bezugsposition bewirkt.

3. Vorrichtung (20a, 20b) nach einem der Ansprüche 1 bis 2, **dadurch gekennzeichnet, dass** der Positionssensor (21) ein induktiver Sensor ist, der von einer primären Erregerspule (31), zwei sekundären Erfassungsspulen (32, 33) und von einem ferromagnetischen Kern (34), der fest mit dem beweglichen Teil (26) verbunden ist, gebildet wird.

4. Vorrichtung (20a, 20b) nach Anspruch 3, **dadurch gekennzeichnet, dass** die Positionierungsmittel (41) Folgendes umfassen:
- Mittel zum Erzeugen eines Erregungssignals, das in die Anschlüsse der primären Erregerspule (31) eingespeist wird,
- Mittel (42) zur synchronen Erfassung, um die Amplitude des Ausgangssignals an den Anschlüssen der sekundären Erfassungsspulen (32, 33) zu bestimmen;
- Mittel zum Vergleichen der Amplitude des Ausgangssignals in Bezug auf einen Sollwert, der der Bezugsposition entspricht;
wobei die Steuerungsmittel auf die Erhitzungsmittel (44) einwirken, bis die Amplitude des Ausgangssignals mit dem Sollwert identisch ist.

5. Vorrichtung (20a, 20b) nach einem der Ansprüche 3 bis 4, **dadurch gekennzeichnet, dass** die Position des ferromagnetischen Kerns (34) linear mit dem Ausgangssignal an den Anschlüssen der sekundären Erfassungsspulen (32, 33) variiert.

6. Vorrichtung (20a, 20b) nach einem der Ansprüche 3 bis 5, **dadurch gekennzeichnet, dass** die Vorrichtung einen Abstandshalter (23) umfasst, der aus einem amagnetischen Material hergestellt ist, wobei der Abstandshalter (23) die Verbindung zwischen dem beweglichen Teil (26) und dem ferromagnetischen Kern (34) sicherstellt.

7. Vorrichtung (20a, 20b) nach einem der Ansprüche 1 bis 2, **dadurch gekennzeichnet, dass** der Positionssensor ein induktiver Sensor des DVRT-Typs ist.

8. Vorrichtung nach einem der Ansprüche 1 bis 2, **dadurch gekennzeichnet, dass** der Positionssensor (60) ein kapazitiver Sensor ist, der von zylindrischen Kondensatoren (62, 63) oder flachen Kondensatoren gebildet wird.

9. Vorrichtung nach einem der Ansprüche 1 bis 2, **dadurch gekennzeichnet, dass** der Positionssensor (70) von mehreren optischen Sensoren (71) gebildet wird, die die aktuelle Position des beweglichen Teils (26) mittels eines optischen Lineals (72) misst.

10. Vorrichtung nach einem der Ansprüche 1 bis 2, **dadurch gekennzeichnet, dass** der Positionssensor ein Drucksensor ist.

11. Vorrichtung nach einem der Ansprüche 1 bis 2, **dadurch gekennzeichnet, dass** der Positionssensor ein Verformungsmessgerät ist.

12. Vorrichtung (20a, 20b) nach einem der Ansprüche 1 bis 11, **dadurch gekennzeichnet, dass** das ausdehnbare Material ein Wachsgemisch oder ein Alkoholgemisch ist.

13. Vorrichtung (20a, 20b) nach einem der Ansprüche 1 bis 12, **dadurch gekennzeichnet, dass** sie Mittel zum Kühlen des ausdehnbaren Materials umfasst, wie eine Peltierkühlvorrichtung.

14. Thermostatschließer (50), **dadurch gekennzeichnet, dass** er eine Aktorvorrichtung (20a, 20b) nach einem der Ansprüche 1 bis 13 und mindestens zwei Zugänge (36, 51, 52) umfasst, von denen mindestens ein Zugang durch das bewegliche Teil (26) durch Verschiebung des beweglichen Teils verschließbar ist.

## Claims

1. An actuator device (20a, 20b) comprising:
- a housing (28) containing an expandable material;
- a part (26) movable in translation under the action of the expansion and/or contraction of said expandable material;
- means (44) to heat said expandable material;
said device being **characterized in that** the device comprises:
- a position sensor (21, 60, 70, 80) measuring a current position of said movable part (26);
- means (41, 77, 85) for positioning said movable part (26) comprising control means acting on said means (44) to heat said expandable material according to said measured current position.

2. The device (20a, 20b) according to claim 1 **characterized in that** said positioning means (41, 77, 85) comprise an inlet capable of receiving a representative signal of a reference position of said movable part (26), said control means acting on said means (44) for heating said expandable material so that the variation in temperature of said expandable material leads to the passage of said movable part (26) from its current position to said reference position.

3. The device (20a, 20b) according to one of claims 1 to 2 **characterized in that** said position sensor (21) is an inductive sensor formed by a primary excitation coil (31), two secondary detection coils (32, 33) and by a ferromagnetic core (34) integral with said movable part (26).

4. The device (20a, 20b) according to claim 3 **characterized in that** said positioning means (41) comprise:
- means to generate an excitation signal injected at the terminals of said primary excitation coil (31);
- synchronous detection means (42) to determine the amplitude of the output signal at the terminals of said secondary detection coils (32, 33);
- means to compare the amplitude of said output signal with relation to a set value corresponding to said reference position;
said control means acting on said heating means (44) until said amplitude of said output signal is equal to said set value.

5. The device (20a, 20b) according to one of claims 3 to 4 **characterized in that** the position of said ferromagnetic core (34) varies linearly with said output signal at the terminals of said secondary detection coils (32, 33).

6. The device (20a, 20b) according to one of claims 3 to 5 **characterized in that** said device comprises a crosspiece (23) made of a non-magnetic material, said crosspiece (23) ensuring the connection between said movable part (26) and said ferromagnetic core (34).

7. The device (20a, 20b) according to one of claims 1 to 2 **characterized in that** said position sensor is a DVRT-type inductive sensor.

8. The device according to one of claims 1 to 2 **characterized in that** said position sensor (60) is a capacitive sensor formed by cylindrical capacitors (62, 63) or by flat capacitors.

9. The device according to one of claims 1 to 2 **characterized in that** said position sensor (70) is formed by a plurality of optical sensors (71) measuring said current position of said movable part (26) by means of an optical ruler (72).

10. The device according to one of claims 1 to 2 **characterized in that** said position sensor is a pressure sensor.

11. The device according to one of claims 1 to 2 **characterized in that** said position sensor is a strain gauge.

12. The device (20a, 20b) according to one of claims 1 to 11 **characterized in that** said expandable material is a mixture of wax or a mixture of alcohol.

13. The device (20a, 20b) according to one of claims 1 to 12 **characterized in that** the device comprises means for cooling said expandable material, such as a Peltier-effect device.

14. A thermostatic valve (50) **characterized in that** the valve comprises an actuator device (20a, 20b) according to one of claims 1 to 13 and at least two entries (36, 51, 52), at least one of which is closable by said movable part (26) by translation of said movable part.
